# DEMANDE DE BREVET EUROPEEN

(11) **EP 2 574 025 A1**
(43) Date de publication de la demande: **27.03.2013**
(21) Numéro de dépôt: 11306206.1
(22) Date de dépôt: 22.09.2011
(51) Int. Cl.: H04M 1/725, G06F 21/00

(54) **Terminal portable faisant office de proxy entre un ordinateur et une carte de type NFC et système correspondant**

(71) Demandeur: Gemalto SA, 92190 Meudon (FR); Gemalto SP SA, 28108 Madrid (ES)
(72) Inventeur: Martin, Christophe, 13600 CEYRESTE (FR); Jimenez, José-Javier, 28880 MADRID (ES)

(57) **Abrégé**

L'invention concerne un terminal portable 20 comportant une première interface de communication de type NFC et une seconde interface de communication apte à entrer en communication avec un ordinateur 10. Selon l'invention, le terminal 20 comprend des moyens (phonesoft) pour établir une communication entre l'ordinateur 10 et une carte de type NFC 30.

## Description

Le domaine de l'invention est celui des télécommunications et concerne plus précisément un terminal portable comportant une première interface de communication de type NFC et une seconde interface de communication apte à entrer en communication avec un ordinateur ainsi qu'un système de communication entre une carte de type NFC (*Near Field Communication -* communication en champ proche) et un ordinateur ne comportant pas de moyen de communication de type NFC.

Dans le domaine des télécommunications, il est de plus en plus fait usage de la technologie NFC. La technologie NFC permet d'établir une communication sans-fil à courte portée et haute fréquence, permettant l'échange d'informations entre des périphériques jusqu'à une distance d'environ 10 cm. Cette technologie est une extension de la norme ISO/CEI 14443 standardisant les cartes de proximité utilisant la RFID (*Radio Frequency IDentification*), qui combinent l'interface d'une carte à puce et un lecteur au sein d'un seul périphérique.

Un périphérique NFC est capable de communiquer autant avec le matériel ISO/CEI 14443 existant qu'avec un autre périphérique NFC, et est tout autant compatible avec les infrastructures sans-contact existantes déjà en utilisation dans les transports en commun et les terminaux de paiement. La NFC est à la base conçue pour un usage dans les téléphones mobiles pour permettre l'utilisation d'applications de paiement ou de transport.

Il apparaît cependant intéressant d'appliquer la NFC à des ordinateurs, fixes ou portables, afin de simplifier l'utilisation de certaines applications à l'utilisateur.

Des ordinateurs pourvus de moyens de communication de type NFC comportent une zone, située à proximité du clavier, comportant une antenne destinée à permettre l'établissement d'une communication courte distance avec une carte NFC que l'utilisateur approche ou pose sur cette zone. Après établissement de la communication NFC entre l'ordinateur et la carte, l'utilisateur peut accéder à différentes applications installées sur l'ordinateur. Une de ces applications est par exemple l'authentification de l'utilisateur : au lieu d'entrer un mot de passe pour déverrouiller l'ordinateur, l'utilisateur approche simplement sa carte NFC de l'antenne NFC de l'ordinateur et celui-ci procède à son authentification pour déverrouiller l'ordinateur et ainsi donner libre accès à ce dernier.

Les ordinateurs dotés de moyens de communication NFC sont cependant peu répandus il va falloir attendre de nombreuses années pour que les parcs d'ordinateurs soient tous équipés de la technologie NFC. Si une entreprise souhaite que ses employés bénéficient de la technologie NFC pour par exemple s'authentifier auprès de leurs ordinateurs, il est nécessaire de remplacer tous leurs ordinateurs, ce qui représente un coût très important. Une alternative existe pourtant : elle consiste à connecter chaque ordinateur à un lecteur NFC relié par un câble USB à l'ordinateur. Ceci représente néanmoins également un coût important et génère un encombrement supplémentaire de l'environnement de travail des employés.

La présente invention a pour objectif de remédier à ces inconvénients. L'invention part du principe que de très nombreux ordinateurs, pour ne pas dire tous les ordinateurs actuels, qu'ils soient fixes ou mobiles, bénéficient de moyens de communication avec des terminaux portables, tels que des téléphones portables. Ces moyens de communication sont par exemple des interfaces USB, Bluetooth ou Wifi. Par ailleurs, les téléphones portables sont de plus en plus équipés d'interfaces NFC pour permettre les applications de paiement et de transport citées précédemment.

La présente invention propose donc de bénéficier de ces moyens de communication équipant les terminaux mobiles, tels que les téléphones portables, pour établir une communication entre un ordinateur non équipé d'une interface NFC et une carte NFC. A cet effet, l'invention propose d'utiliser un terminal mobile, tel qu'un téléphone mobile, comprenant des moyens faisant office de proxy entre un ordinateur non équipé de fonctionnalités NFC et une carte NFC : le terminal mobile comporte une première interface de communication de type NFC destinée à communiquer avec la carte NFC et une seconde interface de communication apte à entrer en communication avec l'ordinateur, cette seconde interface de communication pouvant être du type USB (un câble reliant le terminal mobile à l'ordinateur), ou sans fil (par exemple de type Wifi ou USB, voire de type IRDA).

Les moyens faisant office de proxy sont préférentiellement des moyens logiciels installés dans un élément de sécurité du terminal portable.

L'invention concerne également un système de communication entre une carte de type NFC et un ordinateur ne comportant pas de moyen de communication de type NFC, ce système comportant un terminal portable (par exemple un téléphone mobile) comportant une première interface de communication de type NFC apte en entrer en communication avec la carte de type NFC et une seconde interface de communication apte à entrer en communication avec l'ordinateur, le terminal portable comportant des moyens faisant office de proxy entre l'ordinateur et la carte de type NFC.

Ces moyens faisant office de proxy sont avantageusement des moyens logiciels installés dans un élément de sécurité du terminal portable.

La seconde interface de communication est préférentiellement sans fil, par exemple de type Bluetooth.

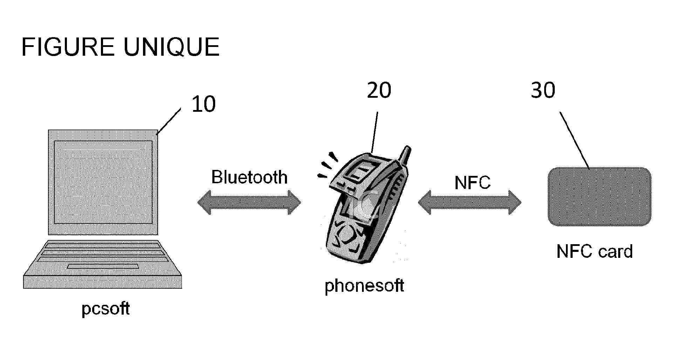

D'autres caractéristiques et avantages de l'invention apparaîtront à la lecture de la description suivante d'un mode de réalisation avantageux de l'invention, donné à titre illustratif et non limitatif, et de la figure unique annexée représentant le système selon l'invention.

Sur cette figure, trois éléments sont identifiés : un ordinateur 10, fixe ou mobile, un terminal portable 20, par exemple un téléphone portable, un PDA ou une tablette, et une carte NFC 30, appelée NFC card.

L'ordinateur 10 embarque un logiciel appelé pcsoft et le terminal 20 embarque un logiciel appelé phonesoft. Le logiciel pcsoft est typiquement installé sur le disque dur de l'ordinateur 10. Le logiciel phonesoft peut être installé dans le terminal 20 lui-même ou alors de préférence dans un élément de sécurité du terminal 10, tel que par exemple dans sa carte SIM, USIM ou UICC.

Cette installation de phonesoft peut être réalisée par exemple par OTA (Over The Air en anglais) directement dans l'élément de sécurité du terminal 20.

Le logiciel phonesoft est utilisé comme un pont (proxy) entre la carte NFC 30 et l'ordinateur 10. Le logiciel pcsoft est quant à lui dédié à donner accès à des applications nécessitant une communication avec la carte NFC 30. Ces applications sont par exemple des applications de type bancaire (l'utilisateur approche sa carte bancaire NFC du terminal 20 et se connecte directement à ses comptes, sans avoir à entrer de mots de passe et/ou de numéros de compte), des applications de déblocage de l'ordinateur 10 (pas de nécessité d'entrer un nom d'utilisateur et/ou de mot de passe), ou des applications de connexion directe à des sites Internet qu'il consulte fréquemment (météo, bourse).

Lorsque l'utilisateur approche sa carte NFC 30 du terminal 20, le logiciel phonesoft établit automatiquement ou à la demande de l'utilisateur une connexion avec l'ordinateur 10, par exemple par voie Bluetooth. Les applications présentes sur l'ordinateur 10 et dépendantes de pcsoft sont alors notifiées de la présence de la carte NFC 30. Ces applications peuvent alors requérir des données de la carte NFC 30 en utilisant un protocole approprié. La fonction de phonesoft est de convertir les demandes reçues de l'ordinateur 10 en des commandes APDU transmises à la carte NFC 30. Les réponses de la carte NFC 30 sont également converties en commandes compréhensibles par le logiciel pcsoft.

L'invention permet donc d'établir une connexion NFC entre un ordinateur non pourvu de fonctionnalités NFC et une carte NFC, par l'intermédiaire d'un élément faisant office de proxy. Cet élément n'est pas nécessairement portable, mais peut être également fixe.

Une application intéressante de l'invention est la suivante : une application spécifique est prévue sur l'ordinateur 10, dépendante de pcsoft. Une application spécifique sur la carte NFC 30 stocke automatiquement les noms d'utilisateur et de mot de passe de l'utilisateur lorsqu'il s'enregistre sur un nouveau site Internet. L'application sur l'ordinateur 10 est un simple plugin du browser Web (Mozilla, Firefox ou Internet Explorer) et exploite pcsoft pour envoyer des commandes à la carte NFC 30 pour y stocker et y lire ultérieurement des noms d'utilistateur et des mots de passe. Une fois qu'un nom d'utilisateur et un mot de passe sont stockés sur la carte 30, l'utilisateur sera automatiquement connecté au site qu'il aura précédemment visité (après y avoir précédemment entré son nom d'utilisateur et son mot de passe), après avoir approché sa carte NFC de son terminal 20.

Une solution intéressante pour ce faire consiste à localiser l'application NFC de la carte et de son antenne sur une partie inexploitée d'une carte au format ISO 7816. Une fois la carte plug Sim, USIM ou UICC insérée dans son terminal, il peut récupérer le reste de la carte où est installée la partie NFC et l'utiliser pour cette reconnaissance automatique.

L'interface entre l'ordinateur 10 et le terminal 20 est de préférence sans fil, par exemple de type Bluetooth ou Wifi, voire IRDA.

L'invention concerne également un système de communication entre une carte de type NFC et un ordinateur ne comportant pas de moyen de communication de type NFC, où un terminal portable comporte des moyens faisant office de proxy entre l'ordinateur et la carte de type NFC.

## Revendications

1. Terminal portable (20) comportant une première interface de communication de type NFC et une seconde interface de communication apte à entrer en communication avec un ordinateur (10), **caractérisé en ce qu'**il comprend des moyens (phonesoft) pour établir une communication entre ledit ordinateur (10) et une carte de type NFC (30).

2. Terminal selon la revendication 1, **caractérisé en ce que** lesdits moyens sont des moyens logiciels installés dans un élément de sécurité dudit terminal portable (20).

3. Terminal selon l'une des revendications 1 et 2, **caractérisé en ce que** ladite seconde interface de communication est sans fil.

4. Terminal selon l'une des revendications 1 à 3, **caractérisé en ce que** ladite seconde interface de communication est de type Bluetooth.

5. Terminal selon l'une des revendications 1 à 4, **caractérisé en ce que** ledit terminal portable (20) est un téléphone mobile.

6. Système de communication entre une carte de type NFC (30) et un ordinateur (10) ne comportant pas de moyen de communication de type NFC, **caractérisé en ce qu'**il comporte un terminal portable (20) comportant une première interface de communication de type NFC apte en entrer en communication avec ladite carte de type NFC (30) et une seconde interface de communication apte à entrer en communication avec ledit ordinateur (10), ledit terminal portable (20) comportant des moyens faisant office de proxy entre ledit ordinateur (10) et ladite carte de type NFC (30).

7. Système selon la revendication 6, **caractérisé en ce que** lesdits moyens sont des moyens logiciels installés dans un élément de sécurité dudit terminal portable (20).

8. Système selon l'une des revendications 6 et 7, **caractérisé en ce que** ladite seconde interface de communication est sans fil.

9. Système selon l'une des revendications 6 à 8, **caractérisé en ce que** ladite seconde interface de communication est de type Bluetooth.

10. Système selon l'une des revendications 6 à 9, **caractérisé en ce que** ledit terminal portable (20) est un téléphone mobile.
